# EUROPÄISCHE PATENTSCHRIFT

(11) **EP 3 895 881 B1**
(45) Veröffentlichungstag und Bekanntmachung des Hinweises auf die Patenterteilung: **06.11.2024**
(21) Anmeldenummer: 21166573.2
(22) Anmeldetag: 01.04.2021
(51) Int. Cl.: B29D 29/08

(54) **ANTRIEBSRIEMEN, INSBESONDERE ZAHNRIEMEN, UND VERFAHREN ZU SEINER HERSTELLUNG**
DRIVE BELT, IN PARTICULAR TOOTHED BELT, AND METHOD OF MANUFACTURING THE SAME
COURROIES D'ENTRAÎNEMENT, EN PARTICULIER COURROIE DENTÉE, ET PROCÉDÉ DE FABRICATION CORRESPONDANT

(30) Priorität: 03.04.2020 DE 102020109429
(43) Veröffentlichungstag der Anmeldung: 20.10.2021
(73) Patentinhaber: Arntz Beteiligungs GmbH & Co. KG, 37671 Höxter (DE)
(72) Erfinder: Gibson Daniel, Pattie, Dumfries DG1 1LR (GB)
(74) Vertreter: Kröncke, Rolf

(56) Entgegenhaltungen:
- EP-A1- 3 617 397
- EP-B1- 2 507 429
- WO-A1-2013/050143
- DE-A1- 10 236 112
- JP-B1- 6 652 678
- US-A1- 2009 011 883
- US-A1- 2014 200 108

## Beschreibung

In einem ersten Aspekt betrifft die vorliegende Erfindung ein Verfahren zum Herstellen eines Antriebsriemens, insbesondere eines Zahnriemens, mit einem Riemenkörper aus elastischem Material und einem Zugträger mit Zugsträngen aus Carboncord. Diese Carboncorde sind dabei als verdrillte Carboncorde mit einer flüssigen Isocyanatlösung getränkt bevor sie als Zugträger für die Antriebsriemen verwendet werden. In einem weiteren Aspekt wird ein so erhältlicher Antriebsriemen bereitgestellt. Dieser Antriebsriemen ist insbesondere ein Hochleistungsriemen, wie ein Hochleistungszahnriemen, mit verbesserten Riemenlaufzeiten und Hafteigenschaften des Carboncords an den Riemenkörper.

### Stand der Technik

EP 2 507 429 beschreibt einen Riemen mit Elastomerkörper und Zugcord als Zugstränge, eingebettet in den Elastomerkörper. Diese Corde sind dabei mit einer Polyharnstoffurethanzusammensetzung imprägniert, wobei diese ein Polyharnstoffreaktionsprodukt aus Polyurethan-Prepolymer mit Isocyanatendgruppen an den Prepolymermolekülen und einen Härter, wobei der Härter Wasser ist, sind. Weiterhin wird ein Cord als Zugstrang zur Verstärkung von elastomeren Artikeln beschrieben, wobei ein Teil des Cords mit einer Polyharnstoffurethanzusammensetzung umfassend das Reaktionsprodukt aus Polyurethan-Prepolymer mit Isocyanatendgruppen mit einem Reaktionsprodukt aus Polyisocyanat und mindestens einem Polyol ausgewählt aus Polyesterpolyol, Polycarbonat, Polyol oder Polyetherpolyol und einem Kettenverlängerer, wobei der Kettenverlängerer Wasser ist, benetzt ist. Schließlich wird ein Verfahren zur Herstellung dieser Corde bereitgestellt. Dazu werden diese als Filamentgarn in eine Lösung getaucht, umfassend ein Polyurethan-Prepolymer mit Isocyanatendgruppen an den Prepolymermolekülen in einem Lösungsmittel, wobei nach dem Trocknen ein Aushärten des Vorpolymers in Gegenwart von Wasser erfolgt, um Zugstränge bereitzustellen. Diese Zugstränge werden dann mit Reaktionsprodukten imprägniert weiter zur Herstellung der Antriebsriemen verwendet.

Aus der US 5,116,286 sind zweischichtige Behandlungen von Cordmaterialien beschrieben. Dabei wird in einem ersten Schritt Isocyanat oder Epoxidharz hinzugefügt, um dann in einem weiteren Schritt mit einem weiteren Harz, z. B. ein Resorcin-Formalin-Latex (RFL) zu beschichten.

Die US 2009/0142572 A1 beschreibt eine Beschichtung der Zugstränge mit einem Isocyanat endständigem Dienelastomer als adhäsive Komponente. Ggf. kann vorab eine erste Behandlung mit einer niedrig molekulargewichtigen, reaktiven Isocyanatverbindung erfolgen. Allerdings erfordert diese Offenbarung, dass immer eine Beschichtung mit einem Isocyanat endständigem Dienelastomer erfolgt. Dieses Dokument fordert, dass sowohl aus der Primerbeschichtung als auch aus der Beschichtung mit dem Dien mit endständigen Isocyanat Reaktionsprodukten aufgrund der Feuchtigkeit und Wärme auftreten, die im Wesentlichen Polyharnstoff und/oder Polycyanorat Redaktionsprodukte sind. D. h., die Isocyanate sind im Wesentlichen bereits abreagiert.

Die GB 1 282 535 beschreibt Cord, z. B. Polyestercord, der mit einem Isocyanatzement beschichtet ist.

Aus der DE 10 2010 043 322 A1 ist ein Antriebsriemen bekannt, der Bruchverminderungsfüllstoffe zwischen den Zwischenräumen der Kohlefasern, die den Carboncord ausbilden, aufweist. Diese Bruchverminderungsfüllstoffe unterscheiden sich dabei von den elastischen Werkstoffen, die den Riemenkörper ausbilden. Diese Bruchverminderungsfüllstoffe sind so ausgewählt, dass auch nach dem Aushärten des elastischen Werkstoffes, eine Biegefähigkeit des Carboncords erhalten bleibt. Außerdem sollten diese Bruchverminderungsfüllstoffe die Eigenschaften des Cords hinsichtlich Spannungsverhalten, Haftung und Biegefestigkeit, wie Sprödigkeit, verbessern.

Als Bruchverminderungsfüllstoffe sind Expoxalharz und/oder Isocyanat genannt. Diese genannten Füllstoffe liegen als Harze vor. Diese Bruchverminderungsfüllstoffe können zu den Kohlenfasern vor oder nach Verdrillen dieser zu dem Cord hinzugefügt werden.

Die WO 2013/050143 A1 beschreibt Riemen mit eingebetteten Zugträgern. Dabei werden sich vom Elastomer des Riemenkörpers unterscheidende Materialien, die sich zwischen den Strängen des Zugträgers befinden, verwendet. Diese Materialien umfassen Verbindungen aus Hydroxyaromaten mit Aldehyden ohne Zusatz von Kautschuk oder Kautschuk-Latex, ein nicht kautschukhaltiges Hydroxyaromat-Aldehyd-Harz, Reaktionsprodukte aus Hydroxyaromaten oder Hydroxyaromat-Aldehyd-Verbindungen mit Isocyanaten oder Isocyanat-Prepolymeren und/oder aromatisch oder polyaromatisch vernetzte Polyurethane. Diese Prepolymere und (Co)polymere sollen die Cordfasern vor Brechen schützen und dem Cord insgesamt eine wesentlich bessere Elastizität und Biegeeigenschaften verleihen. Darüber hinaus soll eine bessere Verbindung mit umgebenden Riemenelastomeren möglich sein.

US 2014/0200108 A1 beschreibt V-förmige CVT-Riemen aus vulkanisiertem Kautschuk mit dehnbarer Cordschicht aus dehnbarem, helixförmig gewundenem Cord. Dieser weist eine Obercord-Kautschukschicht und eine Untercord-Kautschukschicht sowie einem ober- und einem unterseitigen Zahnprofil auf. Das Cord ist ein verdrilltes Einzel-Tau-Garn aus adhäsiv behandelten und imprägnierten Kohlenstofffasern. Die Adhäsiv-Behandlung kann unter anderem mit einem Isocyanat erfolgen.

US 2009/0011883 A1 betrifft einen Antriebsriemen mit einem dehnbaren, Polyester aufweisenden Cord, dieser unterliegt einer Wärme-Schrumpfung bei 100° C von unter 1%. Das Cord kann in einem Herstellungsschritt einer Adhäsiv-Behandlung unterzogen werden, an die sich ein Aushärtungsschritt anschließt.

DE 102 36 112 A1 betrifft einen Kraftübertragungsriemen, der eine Kompressionsschicht und eine klebende Kautschukschicht umfasst, diese sind durch Vulkanisierung miteinander verklebt. Weiterhin umfasst diese einen Aramidfasercord, der in die klebende Kautschukschicht eingebettet ist. Die Aramidfasercords können mit Isocyanat-Verbindungen vorbehandelt sein, bevor sie mit einer RFL-Klebstoffzusammensetzung behandelt werden.

Die Patentanmeldeschrift US 2014/200108 A1 offenbart einen Antriebsriemen, der mit Kohlenstofffasern verstärkt ist, die mit Isocyanat beschichtet sind.

Aufgabe der vorliegenden Erfindung ist die Bereitstellung von Antriebsriemen und Verfahren zur Herstellung hiervon derart, dass die Flexibilität des Cords und der den Cord ausbildenden Kohlenstofffasern im Antriebsriemen verbessert und die Lebensdauer des Cords und damit des Antriebsriemens erhöht werden. Darüber hinaus soll die Adhäsion des Cords mit dem Riemenkörper verbessert werden. D. h., das Spannungsverhalten des Cords bei gleichzeitiger Haftung soll optimiert werden unter Beibehaltung der Biegefestigkeit, wie der Zugspannung und Biegemüdigkeit sowie der Spannungsrelation.

Zur Lösung der Aufgabe wird ein Verfahren gemäß Anspruch 1 bereitgestellt, das sich dadurch auszeichnet, dass verdrillter Carboncord mit flüssiger Isocyanatlösung getränkt und diese flüssige Isocyanatlösung keiner Aushärtung unterworfen wird, bevor sie in Kontakt gebracht wird mit Reaktionspartnern zum Ausbilden des Riemenkörpers. D. h., es findet weder ein Anpolymerisieren noch ein Auspolymerisieren des Isocyanates mit anderen Reaktionspartnern statt. Dies beinhaltet z. B. keine bzw. sehr geringe Umsetzung mit Feuchtigkeit und Wasser aus der Luft, vielmehr liegt das eingesetzte Isocyanat getränkt im Cord derart vor, dass dieses in der weiteren Polymerisation im Rahmen der Härtung der Reaktionspartner zum Ausbilden des Riemenkörpers teilnimmt.

Darüber hinaus wird ein so erhältlicher Antriebsriemen, der als Kraftübertragungs- oder Förderriemen, insbesondere als Zahnriemen, ausgebildet ist, bereitgestellt. Das erfindungsgemäße Verfahren und der so erhältliche Antriebsriemen zeichnet sich durch verbesserte Eigenschaften in Bezug auf die Lebensdauer des Riemens aus. Durch eine bessere Einbindung des Carboncords in die Elastomere des Riemenkörpers ist ein verbessertes Spannungsverhalten und eine bessere Haftung gegeben, ohne die Biegefestigkeit, d. h. die Biegefähigkeit negativ zu beeinflussen.

Das erfindungsgemäße Verfahren ist eines zum Herstellen eines Antriebsriemens, insbesondere eines Zahnriemens, mit einem Riemenkörper aus elastischem Material und einem Zugträger mit Zugsträngen, wobei ein Zugträger mit den Zugsträngen aus Carboncord gebildet ist und der Carboncord einer ist aus einer Vielzahl von Kohlenstofffasern die miteinander zu einem Carboncord verdrillt sind, umfassend die Schritte des
- Behandeln des verdrillten Carboncords mit einer flüssigen Isocyanat-Lösung zum Tränken des Carboncords;
- ggf. Trocknung und ggf. Temperaturbehandlung des mit flüssiger Isocyanat-Lösung getränkten Carboncords;
- Wickeln von getränktem Carboncord als Zugstränge eines Zugträgers um eine Trommel;
- Einbringen einer Lösung von Reaktionspartnern zum Ausbilden des Riemenkörpers aus elastischem Material;
- Ausbilden des Antriebsriemens unter Einwirken von Druck und/oder Temperatur auf die Reaktionspartner und dem gewickelten behandelten Carboncord zur Ausbildung eines Antriebriemens mit Riemenkörper und Zugträger aus Carboncord, wobei das elastische Material des Riemenkörpers die Zugträger zumindest abschnittsweise umschließt;
dadurch gekennzeichnet, dass der getränkte Carboncord keiner Aushärtung vor dem in Kontakt bringen mit den Reaktionspartnern zum Ausbilden des Riemenkörpers ausgesetzt ist, und wobei keine weitere Beschichtung oder kein weiteres Tränken des Carboncords vor Einbringen der Lösung von Reaktionspartnern zum Ausbilden des Riemenkörpers aus elastischem Material erfolgt.

Erfindungsgemäß wird dabei verdrillter Carboncord eingesetzt. Die dem Behandeln des Carboncords vorangegangene Verdrillung der Carbonfasern gewährleistet eine gleichmäßige und kompakte Ausrichtung der Carbonfasern im Carboncord. Dieses führt weiterhin zu einem geringeren Spannungsverlust der Zugstränge im Riemen und damit des gesamten Riemens. Geeignete verdrillte Carboncorde sind dem Fachmann bekannt. Diese verdrillten Carboncorde sind in einer Ausführungsform einfach gezwirnte Carboncorde, es können aber auch doppelt verzwirnte Carboncorde eingesetzt werden. Bei einfach gezwirntem Carboncord ist in einer Ausführungsform dieser gezwirnt mit einer Drehung von maximal 60 T/m, wie maximal 50 T/m, z. B. maximal 45 T/m, wie maximal 40 T/m.

Die Carboncorde können übliche Carboncorde sein, wie sie bereits in Riemen zur Kraftübertragung und zum Antrieb eingesetzt werden, insbesondere wie sie in Zahnriemen verwendet werden. Insbesondere ist ein Carboncord einer, der ein anorganischer Cord ist. D. h., die Carboncorde bestehen im Wesentlichen aus Kohlenstofffasern, auch als Karbonfasern oder Kohlefasern bekannt, und unterscheiden sich von organischen Fasern, wie Aramidfasern oder Polyesterfasern, insbesondere enthalten sie keine O- oder N-Atome.

In einer Ausführungsform sind die Zugträger, bestehend aus Carbonfasern, alternativ können den Carboncorden auch weniger als 50 % Synthetikfasern, wie Aramidfasern, Polyamidfasern, Polyesterfasern usw. hinzugefügt sein. Soweit nicht anders ausgeführt, umfasst der Begriff Carboncord vorliegend sowohl solche bestehend aus Kohlenstofffasern als auch solche, in denen in einer Menge von < 50 % andere Synthetikfasern vorliegen.

Das erfindungsgemäße Verfahren beinhaltet ein Behandeln des verdrillten Carboncords mit einer flüssigen Isocyanat-Lösng. Dieses Behandeln beinhaltet, dass der Carboncord mit der flüssigen Isocyanat-Lösung getränkt wird. Dabei kann diese flüssige Isocyanat-Lösung in die Zwischenräume des Cords eindringen und verbleiben. D. h., die flüssige Isocyanat-Lösung liegt nach Tränken des Carboncords zwischen den Strängen des Carboncords und als mindestens teilweise Ummantelung, wie vollständige Ummantelung des Carboncords, aber auch in den Zwischenräumen des Cords selbst vor.

Unter dem Ausdruck "tränken" wird Imprägnieren, Ummanteln und/oder Eindringen dieser flüssigen Isocyanat-Lösung in den Carboncord verstanden.

Das Einbringen dieser flüssigen Isocyanat-Lösung in den Carboncord kann gemäß üblicher Verfahren erfolgen, z. B. durch Dippen, Eintauchen, Durchziehen durch ein entsprechendes Bad usw. Dem Fachmann sind geeignete Verfahren und weitere Verfahrensschritte bekannt, um ein Tränken des Carboncords durchzuführen.

Der getränkte Carboncord kann ggf. anschließend getrocknet und ggf. anschließend einer Temperaturbehandlung unterzogen werden. Ein Trocknen kann bei Raumtemperatur oder erhöhter Temperatur unter geeigneten Bedingungen erfolgen, ebenso die Temperaturbehandlung. Hierbei können einer oder beide Schritte zumindest teilweise im Vakuum erfolgen. In einer Ausführungsform ist es wichtig, dass das Behandeln des Cords, die anschließende Trocknung sowie das weitergehende Handhaben des Cords möglichst feuchtigkeitsarm erfolgt, da die eingesetzten Isocyanate empfindlich, d. h. reaktiv gegenüber Feuchtigkeit sind. Entsprechend erfolgt in einer Ausführungsform die Trocknung und/oder Temperaturbehandlung und anschließende Lagerung unter Ausschluss von Feuchtigkeit. In einer Ausführungsform können die eingesetzten Isocyanate geblockte Isocyanate enthalten. Bei Verwendung dieser geblockten Isocyanaten mit geeigneten Schutzgruppen, die bei der Aushärtung freigesetzt werden, ist die Handhabung vereinfacht. In einer Ausführungsform liegen keine geblockten Isocyanate vor.

Das erfindungsgemäße Verfahren zeichnet sich dadurch aus, dass der getränkte Carboncord keiner Aushärtung unterworfen wird vor dem Inkontaktbringen des getränkten Carboncords mit den Reaktionspartnern zum Ausbilden des Riemenkörpers. Dadurch wird erreicht, dass eine möglichst große Reaktivität mit den Bestandteilen und Reaktionspartnern des elastomeren Materials, das den Riemenkörper ausbildet, vorliegt. Entsprechend findet gerade keine vorherige Reaktion des Isocyanats mit anderen Reaktionspartnern statt, wie z. B. auch mit Feuchtigkeit und Wasser.

Vielmehr ist erfindungsgemäß vorgesehen, dass die Isocyanate, die erfindungsgemäß im Cord vorliegen, mit den Reaktionspartnern des Riemenelastomers reagieren. Übliche Reaktionspartner zur Ausbildung des Riemenelastomers sind z. B. Polyurethan-Prepolymere mit reaktiven Isocyanat-Gruppen und primäre Amine, z. B. Diamin, als Härter. Diese reagieren entsprechend zum Riemenelastomer. Bei der Härtung des Riemenelastomers, bei der ein Riemenwickel gebildet wird, kommt es neben der Reaktion des Polyurethan-Prepolymers mit dem Diamin zum Riemenelastomer auch zur Umsetzung des Polyurethan-Prepolymers oder des fertigen Riemenelastomers, also einem Polyurethanharnstoff, mit dem im Cord vorliegenden Isocyanat unter Ausbildung entsprechender kovalenter Bindungen. Tatsächlich kann das Isocyanat jedoch aufgrund seiner hohen Reaktivität Reaktionen mit allen Reaktionspartnern eingehen, die im Herstellungsverfahren enthalten sind. Hierdurch wird eine verbesserte Anbindung, d. h. Haftung, des Cords an das umgebene Riemenelastomer erzielt. Dieser Antriebsriemen zeichnet sich durch lange Lebensdauer und hervorragende Biegestabilitäten, wie Biegefestigkeit und verbessertem Spannungsverhalten sowie einer verbesserten Anbindung an das elastomere Material des Riemenkörpers aus.

In einer Ausführungsform ist das elastische Material ein Polyurethan, so dass der Antriebsriemen einer ist mit einem Polyurethan-Elastomer und einem Carboncord.

Es zeigte sich, dass aufgrund der erfindungsgemäßen Cordbehandlung die erhaltenen Antriebsriemen bei Riemenlaufzeituntersuchungen Vorteile im Vergleich zu Riemen mit unbehandelten Cord aber auch im Vergleich zu einem mit einfachem Polyurethan behandelten Cord aufweist. Im Stand der Technik wird gefordert, dass Reaktionsprodukte als Füllstoffe vorliegen, um die Cordeigenschaften zu verbessern. Im Gegensatz dazu wird erfindungsgemäß gerade diese Umsetzung zur Ausbildung von Reaktionsprodukten vermieden, vielmehr liegen die Isocyanate reaktiv zur Umsetzung mit den Reaktionspartnern des Riemenelastomers vor.

Entsprechend wird in dem erfindungsgemäßen Verfahren der getränkte Carboncord als Zugstränge eines Zugträgers um die Trommel gewickelt, möglichst unter Ausschluss von Feuchtigkeit. Wenn auch geblockte Isocyanate vorliegen, ist ein Ausschluss von Feuchtigkeit nicht notwendig. Das Wickeln kann dabei in einer Ausführungsform ein endlos Wickeln sein. Das heißt, der Cord ist ein Endloscord, der endlos um die Trommel gewickelt wird. Endlos bedeutet vorliegend, dass der Cord mehrfach, wie mindestens zweifach, um die Trommel gewickelt wird. Anschließend werden die Reaktionspartner zum Ausbilden des Riemenkörpers aus elastischem Material eingebracht. Dies kann üblicherweise durch Eingießen dieser Reaktionspartner erfolgen. Dieser dann vorliegende Riemenwickel mit den entsprechenden Reaktionspartnern wird dann unter Einwirken von Druck und/oder Temperatur umgesetzt und gehärtet zur Ausbildung eines Antriebsriemens mit Riemenkörper und Zugträger aus Carboncord, wobei das elastische Material des Riemenkörpers die Zugträger zumindest abschnittsweise umschließt.

Bei der erfindungsgemäßen Isocyanat-Lösung handelt es sich in einer Ausführungsform um eine mit einem Mehrfach-Isocyanat. In einer Ausführungsform ist dieses Mehrfach-Isocyanat ein Diisocyanat. Dem Fachmann sind geeignete Isocyanate bekannt. Eine geeignete Form ist ein MDI (Methylen-Diphenyl-Isocyanat), das als PMDI, d. h. mit verschiedenen Bestandteilen vorliegen kann. Geblockte Isocyanate können zumindest einen Teil der Isocyanate sein. Geblockte Isocyanate sind dem Fachmann bekannt. Sie sind thermisch instabil und zersetzten sich, also deblockieren sich, bei erhöhter Temperatur. Ein solches deblockieren kann bei Temperaturen auftreten bei denen das Ausbilden des Riemens, wie das Härten, stattfindet.

Die Isocyanate können in einer Ausführungsform in einem Lösungsmittel gelöst vorliegen. Dem Fachmann sind geeignete Lösungsmittel für die entsprechenden Isocyanate bekannt. Hierbei handelt es sich insbesondere um organische Lösungsmittel. Z. B. kann MDI in Toluol gelöst eingesetzt werden.

Um ein entsprechendes Benetzen bzw. Tränken oder Imprägnieren des Carboncords zu erreichen, sollte die flüssige Isocyanat-Lösung eine niedrige Viskosität aufweisen. Im Falle von Toluol als Lösungsmittel kann diese Viskosität bei 0,6 mPa x s sein.

In einer Ausführungsform wird dabei eine Isocyanat-Lösung eingesetzt, die ein Tränken des Carboncords derart erlaubt, dass das Isocyanat in einer Menge von 2 bis 10 Gew.% bezogen auf den Carboncord, bevorzugt 3 bis 7 Gew.% bezogen auf den Carboncord vorliegt. Abhängig von der gewählten Behandlungsmethode und oder der Trocknungsmethode kann es sich um eine Isocynanat-Toluol Lösung handeln, die eine sehr hohe oder eine sehr niedrige Isocyanat-Konzentration aufweist. Entsprechend kann z. B. eine Isocyanat-Lösung mit Toluol als Lösungsmittel das Isocyanat in einer Menge von 12 bis 25 Gew.%, wie 12 bis 20 Gew.% bezogen auf das Toluol enthalten.

In einer Ausführungsform der vorliegenden Erfindung wird eine MDI-Lösung in Toluol eingesetzt, um den Carboncord zu tränken.

Das erfindungsgemäße Verfahren umfasst weiterhin, dass der getränkte Carboncord, also der mit der Isocyanatlösung behandelte Carboncord, keine weitere Beschichtung oder kein weiteres Tränken des Carboncords mit anderen Lösungen vor dem Wickeln der Carboncords um eine Trommel und dem Hinzufügen der Reaktionspartner zum Ausbilden des Riemenkörpers aus elastischem Material unterworfen wird. Insbesondere erfolgt kein Anpolymerisieren oder Umsetzung des Isocyanats mit Wasser oder durch Luftfeuchtigkeit, um ein in irgendeinerweise umgesetztes Isocyanat oder z.B. ein Prepolymer auszubilden.

Es zeigte sich, dass durch Weglassen dieser weiteren Schritte und durch Weglassen weiterer Beschichtungen und Füllstoffe anderer Materialien eine verbesserte Lebensdauer und Biegestabilität des Riemens mit dem Zugstrang aus Carboncord erzielt werden kann.

In einer Ausführungsform ist der Carboncord einer mit einer Tex von 200 bis 3600 und/oder einem Durchmesser von 0,3 bis 2,4 mm.

Der Carboncord liegt dabei in einer Ausführungsform nicht als Textil, insbesondere nicht als Gewebe oder Gewirke vor. Insbesondere ist der Cord somit kein textiler Zugstrang.

Der Riemenkörper mit elastischem Material ist in einer Ausführungsform einer aus einem Polyurethan-Material. Es können übliche synthetische Elastomere, wie sie für Antriebsriemen, wie Kraftübertragungsriemen und Förderriemen eingesetzt werden, verwendet werden, insbesondere handelt es sich hierbei um Riemen-Polyurethane und speziell Zahnriemen-Polyurethane.

In einer Ausführungsform ist der Riemenkörper, auch als Grundkörper bezeichnet, kein radikalisch vernetzbarer oder radikalisch polymerisierter Werkstoff oder Elastomer.

Vorzugsweise ist das synthetische Elastomer des Riemengrundkörpers daher ein Polyurethan. In einer Ausführungsform ist dabei die Isocyanat-Komponente des Polyurethans das gleiche Isocyanat, wie es erfindungsgemäß zum Tränken des Carboncords als flüssige Isocyanat-Lösung eingebracht wurde.

Der Antriebsriemen kann ein Kraftübertragungs- oder Förderriemen sein, vorzugsweise ein Zahnriemen. Die Erfindung ist auch für weitere Riemenformen wie z. B. Keilriemen, Keilrippen-Riemen oder Flachriemen geeignet.

Weiterhin kann das erfindungsgemäße Verfahren das Aufbringen einer Textilauflage als äußere Schicht umfassen. Diese Textilauflage bildet insbesondere die äußere Schicht der Kraftübertragungszone. Die Textilauflage kann weiterhin z. B. eine äußere Beschichtung aufweisen, die die Oberflächeneigenschaften beeinflusst.

In einer Ausführungsform ist das elastische Material eines gebildet aus einem Polyurethan-Prepolymer mit reaktiven Isocyanat-Gruppen und einem Primäramin, insbesondere ein Diamin, als Härter.

In einer Ausführungsform weist der Antriebsriemen Carboncorde auf, wobei alle Carboncorde mit der Isocyanat-Lösung getränkt vorliegen. In einer alternativen Ausführungsform können mindestens ein Teil der Carboncorde erfindungsgemäß mit flüssiger Isocyanat-Lösung getränkt sein.

Weiterhin wird erfindungsgemäß ein Antriebsriemen erhältlich mit dem erfindungsgemäßen Verfahren bereitgestellt. Dieser Antriebsriemen zeichnet sich durch lange Lebensdauer und hervorragende Biegestabilitäten, wie Biegefestigkeit und verbessertem Spannungsverhalten sowie einer verbesserten Anbindung an das elastomere Material des Riemenkörpers aus.

Der Antriebsriemen kann insbesondere ein Hochleistungsriemen mit Carboncord als Zugträger und Polyurethan als elastisches Material des Riemenkörpers sein. Der Riemenkörper kann dabei Riemenzähne zur Ausbildung eines Zahnriemens aufweisen. Ggf. kann weiterhin der Antriebsriemen eine Beschichtung mit einer Textilauflage in der Kraftübertragungszone des Antriebsriemens aufweisen.

Im Folgenden wird die Erfindung anhand von Ausführungsbeispielen beschrieben, die allein zu illustrativen Zwecken dienen und den Umfang der Erfindung, wie oben beschrieben, nicht einschränken.

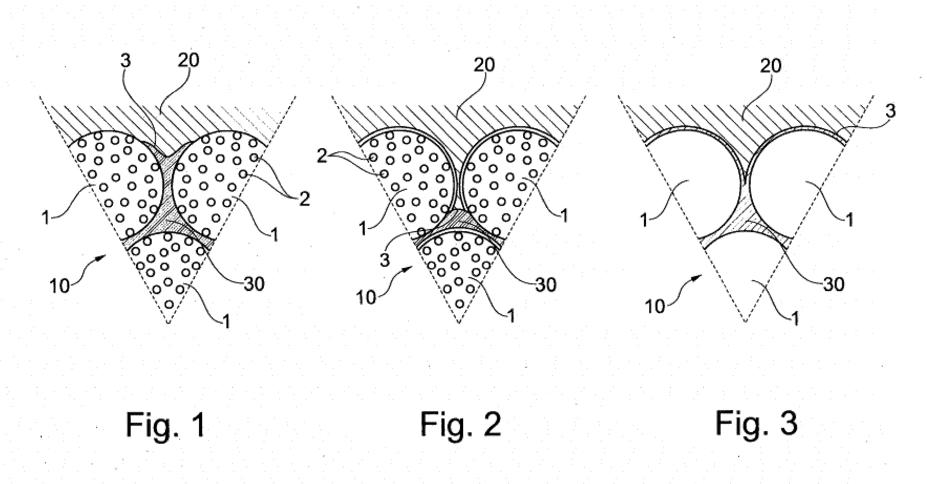

Die Figuren 1 bis 3 zeigen Sektoren verschiedener Cordquerschnitte zum elastomeren Material, hier in Polyurethan eingeschlossenem und gefüllten Cord.

Figur 1 zeigt in einer Querschnittsdarstellung, in der nur ein Segment eines Cords 10 gezeigt ist, mit einem in Polyurethan eingebetteten Cord 10 mit den Strängen 1 und darin angedeuteten Carbonfasern 2. Das Polyurethan-Material 20 des Riemenkörpers bettet den Cord ein, wobei sich das Isocyanat 30 um die Stränge 1 gelegt hat. Im Grenzbereich 3 liegt das Isocyanat umgesetzt mit dem Polyurethan vor, so dass hier eine gute Anbindung des Cords an den Riemenkörper erfolgt. Ggf. kann die Isocyanat-Lösung auch in die Stränge 1 eingedrungen vorliegen.

Figur 2 zeigt ein weiteres Ausführungsbeispiel. Die Isocyanat-Lösung 30 befindet sich in diesem Beispiel als Beschichtung auf einem der inneren Stränge 1, so dass das Polyurethan 20 im Randbereich des Cords tiefer in die Zwischenräume zwischen den äußeren Strängen 1 des Cordmaterials eindringen kann. Hierbei ergibt sich eine optimale mechanische Verzahnung des Polyurethans 20 des Riemenkörpers, das den Cord 10 einbettet, mit den Cordsträngen 1. Die ausreichende Biegestabilität und Elastizität sowie Anbindung an den Riemenkörper wird durch das Isocyanat 30 gewährleistet. Es erfolgt eine ausreichende Anbindung zwischen Isocyanat 30 und Polyurethan 20 an der gemeinsamen Grenzfläche 3.

Figur 3 zeigt ein drittes Ausführungsbeispiel, bei dem die gezeigten Stränge 1 des Cords 10 mit dem Isocyanat 30 beschichtet sind. Auf diese Weise ist der Cord 10 zugleich mit dem Isocyanat 30 ummantelt. Durch die entsprechend sehr große Oberfläche 3 zum Polyurethan 20 kann sich eine entsprechend gute Haftung durch Anbindung ergeben.

Ein wesentlicher Aspekt ist, dass ein Tränken des Cords dann erfolgt, wenn dieser Cord als verdrillte Kohlenstofffasern vorliegt, und dass das Isocyanat, das nach dem Tränken an oder in dem Cord vorliegt, vor Umsetzen mit den Reaktionspartnern zur Ausbildung des elastischen Materials des Riemenkörpers nicht oder nur in möglichst geringem Umfange anpolymerisiert oder anderweitig umgesetzt wird.

## Patentansprüche

1. Verfahren zum Herstellen eines Antriebsriemens, insbesondere eines Zahnriemens, mit einem Riemenkörper aus elastischem Material und Zugträger mit Zugsträngen, wobei ein Zugträger mit den Zugsträngen aus Carboncord gebildet ist und der Carboncord einer ist aus einer Vielzahl von Kohlenstofffasern die miteinander zu einem Carboncord verdrillt sind, umfassend die Schritte des
- Behandeln des verdrillten Carboncords mit einer flüssigen Isocyanat-Lösung zum Tränken des Carboncords;
- ggf. Trocknung und ggf. Temperaturbehandlung des mit flüssiger Isocyanat-Lösung getränkten Carboncords;
- Wickeln von getränktem Carboncord als Zugstränge eines Zugträgers um eine Trommel;
- Einbringen einer Lösung von Reaktionspartnern zum Ausbilden des Riemenkörpers aus elastischem Material;
- Ausbilden des Antriebsriemens unter Einwirken von Druck und/oder Temperatur auf die Reaktionspartner und dem gewickelten behandelten Carboncord zur Ausbildung eines Antriebriemens mit Riemenkörper und Zugträger aus Carboncord, wobei das elastische Material des Riemenkörpers die Zugträger zumindest abschnittsweise umschließt,
wobei der getränkte Carboncord keiner Aushärtung vor dem in Kontakt bringen mit den Reaktionspartnern zum Ausbilden des Riemenkörpers ausgesetzt ist:
**dadurch gekennzeichnet, dass**
keine weitere Beschichtung oder kein weiteres Tränken des Carboncords vor Einbringen der Lösung von Reaktionspartnern zum Ausbilden des Riemenkörpers aus elastischem Material erfolgt.

2. Verfahren nach Anspruch 1, wobei das elastische Material ein Polyurethanmaterial ist.

3. Verfahren zum Herstellen eines Antriebsriemens nach Anspruch 1 oder 2, wobei die Isocyanatlösung eine ist, mit einem Mehrfachisocyanat, insbesondere einem Diisocyanat.

4. Verfahren nach Anspruch 3, wobei die Isocyanatlösung eine Methylendiphenyl-Isocyanatlösung ist.

5. Verfahren nach einem der vorherigen Ansprüche wobei die Isocyanatlösung mit einem Lösungsmittel, insbesondere einem organischen Lösungsmittel, wie Toluol vorliegt.

6. Verfahren nach einem der vorherigen Ansprüche, wobei im ggf. getrockneten und ggf. temperaturbehandelten getränkten Carboncord das Isocyanat in einer Menge von 2 - 10 Gew.-% bezogen auf den Carboncord, bevorzugt 3 - 7 Gew.-% bezogen auf den Carboncord, vorliegt.

7. Verfahren nach einem der vorherigen Ansprüche, wobei die flüssige Isocyanat-lösung eine Viskosität im Bereich des Lösungsmittels Toluol von 0,6 mPa x s aufweist.

8. Verfahren nach einem der vorherigen Ansprüche, wobei der Carboncord einen Tex von 200 - 3600 und/oder einen Durchmesser von 0,3-2,4 mm aufweist.

9. Verfahren nach einem der vorherigen Ansprüche, wobei der Carboncord ein einfach gezwirnter Carboncord ist, bevorzugt einer mit einer Drehung von max. 60 T/m , wie max. 50 T/m, z. B. 40 T/m.

10. Verfahren nach einem der vorherigen Ansprüche, wobei auf dem Riemenkörper insbesondere auf die Kraftübertragungszone eine Textilauflage als äußere Schicht aufgebracht ist.

11. Verfahren nach einem der vorherigen Ansprüche, wobei die Reaktionspartner zum Ausbilden des Riemenkörpers aus elastischem Material eingebracht werden als Prepolymer mit einem Härter, insbesondere einem Polyurethanprepolymer mit reaktiven Isocyanatgruppen und Primäramin, wie einem Diamin, als Härter.

12. Verfahren nach einem der vorherigen Ansprüche, wobei das Einbringen ein Gießen der Reaktionspartner in eine Form mit dem auf eine Trommel gewickelten Carboncord ist.

13. Antriebsriemen erhältlich mit einem Verfahren nach den Ansprüchen 1 bis 12.

14. Antriebsriemen nach Anspruch 13, wobei dieser ein Hochleistungsriemen mit Carboncord als Zugträger und Polyurethan als elastisches Material des Riemenkörpers ist und wobei der Riemenkörper Riemenzähne aufweist zur Ausbildung eines Zahnriemens ggf. weiterhin aufweisend eine Beschichtung mit einer Textilauflage in der Kraftübertragungszone des Antriebriemens.

## Claims

1. Method for producing a drive belt, in particular a toothed belt, having a belt body composed of elastic material and tension members with tensile strands, wherein a tension member with the tensile strands is formed from carbon cord and the carbon cord is a cord composed of a multiplicity of carbon fibers which are twisted together to form a carbon cord, said method comprising the steps of
- treating the twisted carbon cord with a liquid isocyanate solution for soaking of the carbon cord;
- optionally drying and optionally heat-treating the carbon cord soaked with liquid isocyanate solution;
- winding soaked carbon cord in the form of tensile strands of a tension member around a drum;
- introducing a solution of reaction partners for formation of the belt body composed of elastic material;
- forming the drive belt under the action of pressure and/or temperature on the reaction partners and the wound treated carbon cord in order to form a drive belt having a belt body and tension members composed of carbon cord, wherein the elastic material of the belt body at least partially encloses the tension members, wherein the soaked carbon cord is not subjected to curing before being brought into contact with the reaction partners for formation of the belt body **characterized in that** no further coating or no further soaking of the carbon cord is carried out before introduction of the solution of reaction partners for formation of the belt body composed of elastic material.

2. The method according to claim 1, wherein the elastic material is a polyurethane material.

3. The method for producing a drive belt according to claim 1 or 2, wherein the isocyanate solution is a solution comprising a polyisocyanate, in particular a diisocyanate.

4. The method according to claim 3, wherein the isocyanate solution is a methylene diphenyl isocyanate solution.

5. The method according to one of the preceding claims, wherein the isocyanate solution is present with a solvent, in particular an organic solvent, such as toluene.

6. The method according to one of the preceding claims, wherein, in the soaked carbon cord which is optionally dried and optionally heat-treated, the isocyanate is present in an amount of 2 - 10% by weight in relation to the carbon cord, preferably 3 - 7% by weight in relation to the carbon cord.

7. The method according to one of the preceding claims, wherein the liquid isocyanate solution has a viscosity in the range of the solvent toluene of 0.6 mPa x s.

8. The method according to one of the preceding claims, wherein the carbon cord has a tex of 200 - 3600 and/or a diameter of 0.3 - 2.4 mm.

9. The method according to one of the preceding claims, wherein the carbon cord is a singly twisted carbon cord, preferably one with a twist of at most 60 t/m, such as at most 50 t/m, for example 40 t/m.

10. The method according to one of the preceding claims, wherein a textile overlay is applied as outer layer to the belt body, in particular to the power transmission zone.

11. The method according to one of the preceding claims, wherein the reaction partners for formation of the belt body composed of elastic material are introduced in the form of a prepolymer with a curing agent, in particular a polyurethane prepolymer with reactive isocyanate groups and primary amine, such as a diamine, as curing agent.

12. The method according to one of the preceding claims, wherein the introduction involves casting the reaction partners into a mold with the carbon cord wound onto a drum.

13. Drive belt obtainable by a method according to claims 1 to 12.

14. Drive belt according to claim 13, wherein said drive belt is a high performance belt having carbon cord as tension member and polyurethane as elastic material of the belt body, and wherein the belt body comprises belt teeth for formation of a toothed belt optionally furthermore comprising a coating with a textile overlay in the power transmission zone of the drive belt.

## Revendications

1. Procédé de fabrication d'une courroie de transmission, en particulier d'une courroie dentée, comprenant un corps de courroie en matériau élastique et un support de traction muni de brins de traction, un support de traction muni des brins de traction étant formé à partir d'une corde de carbone, et la corde de carbone étant constituée d'une pluralité de fibres de carbone qui sont torsadées les unes avec les autres en une corde de carbone, comprenant les étapes consistant à :
- traiter la corde de carbone torsadée avec une solution d'isocyanate liquide destinée à imprégner la corde de carbone ;
- éventuellement faire sécher et éventuellement traiter thermiquement la corde de carbone imprégnée de la solution d'isocyanate liquide ;
- enrouler la corde de carbone imprégnée, en tant que brins de traction d'un support de traction, autour d'un tambour ;
- introduire une solution de réactifs destinés à former le corps de courroie en matériau élastique ;
- former la courroie de transmission sous l'effet de la pression et/ou de la température sur les réactifs et sur la corde de carbone traitée enroulée destinée à former une courroie de transmission comprenant un corps de courroie et un support de traction constitué en corde de carbone, le matériau élastique du corps de courroie entourant au moins localement les supports de traction,
la corde de carbone imprégnée n'étant pas soumise à un durcissement avant la mise en contact avec les réactifs destinés à former le corps de courroie,
**caractérisé en ce qu'**aucun autre revêtement ou aucune autre imprégnation de la corde de carbone n'a lieu avant l'introduction de la solution de réactifs destinés à former le corps de courroie en matériau élastique.

2. Procédé selon la revendication 1,
dans lequel le matériau élastique est un matériau polyuréthane.

3. Procédé de fabrication d'une courroie de transmission selon la revendication 1 ou 2,
dans lequel la solution d'isocyanate est une solution comprenant un isocyanate multiple, en particulier un diisocyanate.

4. Procédé selon la revendication 3,
dans lequel la solution d'isocyanate est une solution d'isocyanate de méthylènediphényle.

5. Procédé selon l'une des revendications précédentes,
dans lequel la solution d'isocyanate est présente avec un solvant, en particulier un solvant organique tel que le toluène.

6. Procédé selon l'une des revendications précédentes,
dans lequel l'isocyanate est présent dans la corde de carbone imprégnée, éventuellement séchée et éventuellement traitée thermiquement, en une quantité de 2 à 10 % en poids par rapport à la corde de carbone, de préférence de 3 à 7 % en poids par rapport à la corde de carbone.

7. Procédé selon l'une des revendications précédentes,
dans lequel la solution d'isocyanate liquide présente une viscosité dans la plage du solvant qu'est le toluène de 0,6 mPa x s.

8. Procédé selon l'une des revendications précédentes,
dans lequel la corde de carbone présente un tex de 200 à 3600 et/ou un diamètre de 0,3 à 2,4 mm.

9. Procédé selon l'une des revendications précédentes,
dans lequel la corde de carbone est une corde de carbone à retors simple, de préférence une corde de carbone ayant une torsion de 60 T/m au maximum, de 50 T/m au maximum, par exemple de 40 T/m.

10. Procédé selon l'une des revendications précédentes,
dans lequel une couche de textile est appliquée sur le corps de courroie, en particulier sur la zone de transmission de force, en tant que couche extérieure.

11. Procédé selon l'une des revendications précédentes,
dans lequel les réactifs destinés à former le corps de courroie en matériau élastique sont introduits sous forme de prépolymère avec un durcisseur, en particulier un prépolymère de polyuréthane avec des groupes isocyanate réactifs et une amine primaire, telle qu'une diamine, comme durcisseur.

12. Procédé selon l'une des revendications précédentes,
dans lequel l'introduction est une coulée des réactifs dans un moule comprenant la corde de carbone enroulée sur un tambour.

13. Courroie de transmission pouvant être obtenue par un procédé selon les revendications 1 à 12.

14. Courroie de transmission selon la revendication 13,
dans laquelle il s'agit d'une courroie de haute performance comprenant une corde de carbone comme support de traction et du polyuréthane comme matériau élastique du corps de courroie, et le corps de courroie comprend des dents de courroie pour former une courroie dentée, le cas échéant, comprenant en outre un revêtement avec une couche de textile dans la zone de transmission de force de la courroie de transmission.
